# EUROPEAN PATENT APPLICATION

(11) **EP 1 434 230 A2**
(43) Date of publication of application: **30.06.2004**
(21) Application number: 03029312.0
(22) Date of filing: 18.12.2003
(51) Int. Cl.: G11B 33/08, G11B 33/12, G11B 17/04

(54) **Electronic apparatus**

(30) Priority: 27.12.2002 JP 2002380272
(71) Applicant: Kabushiki Kaisha Toshiba, Tokyo (JP)
(72) Inventor: Hayakawa, Hideo Intellectual Property Division, Tokyo 105-8001 (JP)
(74) Representative: Henkel, Feiler & Hänzel

(57) **Abstract**

When the apparatus is turned on, the rotation shaft of a solenoid (14) and hence an eccentric cam is rotated through a predetermined angle and a semi-fixing side of an HDD bracket (20) is pushed down to a latching flat section (15b) of a stepped stud (15) whereby the bracket (20) is fixed to a chassis (10) through the stepped stud (15).

## Description

The present invention relates to a retaining structure of a precision device incorporated, as such, into an apparatus.

In recent years, a DVD recording apparatus capable of recording and playback has been introduced, as a longer-time duration recording apparatus, in the market with a hard disk drive (HDD) incorporated therein to impart an added storage capacity to this DVD model. The adoption of an HDD in such AV apparatus is now beginning to be made due to an abrupt increase in recording capacity of the HDD as well as to a greater price lowering of the HDD. However, such an HDD-incorporated AV apparatus is handled as a home electrical appliance, unlike a PC product, and no careful consideration is paid, during shipment, to the inner structure in that housing.

Generally, the HDD is screwed through a bracket to a chassis of a housing so as not to cause any unwanted resonance to occur at the rotation of the HDD's spindle motor and head at a seek time.

Since the HDD incorporated into the apparatus body is fixed to the chassis, it is not strong enough against impact and vibration at a fall, etc., during shipment. And an impact on the apparatus body has been a main cause of damage to the HDD, that is, a precision electrical unit. At a packaging of the apparatus body for shipment, expensive damping material is used so as to soften impact on the inner structure of the apparatus to the lowest possible extent and a complicated damping structure is used, thus resulting in one cause for a high cost.

It is accordingly the object of the present invention to provide an apparatus designed to protect its inner electronic unit from an impact and vibration involved.

An electronic apparatus according to one embodiment of the present invention comprises a housing, an electronic unit incorporated into the housing, and a retaining mechanism configured to selectively retain the incorporated electronic unit in a floating state or in a fixed state in which the retaining mechanism is configured to retain the electronic unit in a fixed state in accordance with the start of electrical power supply to the electronic unit.

By this structure, the incorporated electronic unit can be protected from an impact and vibration involved.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing a protection structure of an electronic unit of an electronic apparatus according to a first embodiment of the present invention;
FIGS. 2A to 2C each are a view showing a detail of the structure of the electronic unit in FIG. 1;
FIG. 3 is a block diagram showing one practical form of the electronic structure of the present apparatus;
FIGS. 4A and 4B each are a view showing an HDD protection structure of an HDD incorporated DVD recorder according to a second embodiment of the present invention;
FIGS. 5A and 5B each are a view showing an HDD protection structure of an HDD incorporated DVD recorder according to third embodiment of the present invention; and
FIG. 6 is a view showing an HDD protection structure of an HDD incorporated DVD recorder according to a fourth embodiment of the present invention.

With reference to the drawing, the embodiments of the present invention will be described in more detail below. In the embodiments below, an electronic apparatus of the present invention is explained as an HDD-incorporated DVD recorder, but the present invention is not restricted thereto. The present invention can be applied to other HDD-incorporated apparatuses such as an HDD-incorporated TV and HDD-incorporated tuner and to those apparatuses incorporating a unit not strong enough against an impact and vibration.

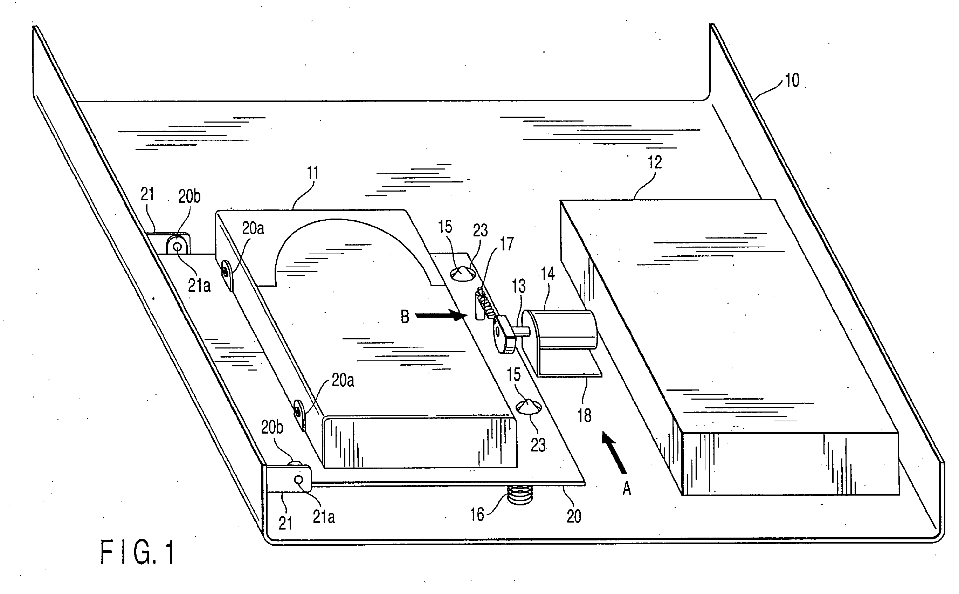

FIG. 1 is a perspective view showing an electronic unit retaining structure for the electronic apparatus according to one embodiment of the present invention.

A DVD drive 12 is fixed by screws (not shown) to a chassis 10 of a housing through a damping member such as rubber. At a plurality of fixing sections including fixing sections 20a, an HDD 11 is fixed by screws to an HDD mounting plate (hereinafter referred to as an HDD bracket) 20. The fixing section 20a is formed by, for example, cutting an iron plate for the HDD bracket 20 to provide a substantially semi-circular cut-in portion and bending it as an up-turned portion.

In general, the HDD incorporated into an apparatus body is fixed to the chassis and is not strong enough against an impact and vibration at a fall, etc., during shipment, for example. The reason for the lack of its structural strength lies in that, when a power source is not turned ON, the head of the HDD is generally put in contact with the disk and, upon impact and vibration, the disk is damaged by the head. In the embodiment of the present invention, the HDD is retained in a floating state when it is not turned on.

The HDD bracket 20 has hinge sections 20b on one side (left side in the Figure). The hinge section 20b is so mounted to the hinge bracket 21 as to be rotatable about a rotation shaft 21a. The hinge bracket 21 is fixed to the chassis 10. The other side (right side in the Figure) of the HDD bracket 20 is mounted, in a semi-fixed or floating state, to the chassis 10 through a damping member 16 such as a coil spring.

As a result, even if a strong impact acts upon the apparatus due. to a fall during shipment, the HDD is protected from such impact. As the damping member 16 use can be made of not only a coil spring but also other impact absorbing material such as rubber, urethane, air spring, and so on.

In the semi-fixed state under the damping member 16, the HDD 12 sometimes involves a resonance between the spindle motor of the disk and the head at the time of operation, for example, when the head seeks a track of the hard disk and a resultant operation error. According to the present embodiment, the apparatus is so structured that, when it is turned ON, the HDD 11 is fixed to the chassis. At a predetermined position spaced from the HDD bracket 20 on the semi-fixed side (on the damping member placed side) of the HDD bracket 20, a solenoid (or motor) 14 acting as an actuator is fixed by an actuator bracket 18 to the chassis 10. An eccentric cam 13 is mounted on a rotation shaft of the solenoid 14. When the apparatus is turned on, the rotation shaft of the solenoid, that is, the eccentric cam, is rotated only through a predetermined angle to cause the semi-fixed side of the HDD bracket 20 to be pushed down.

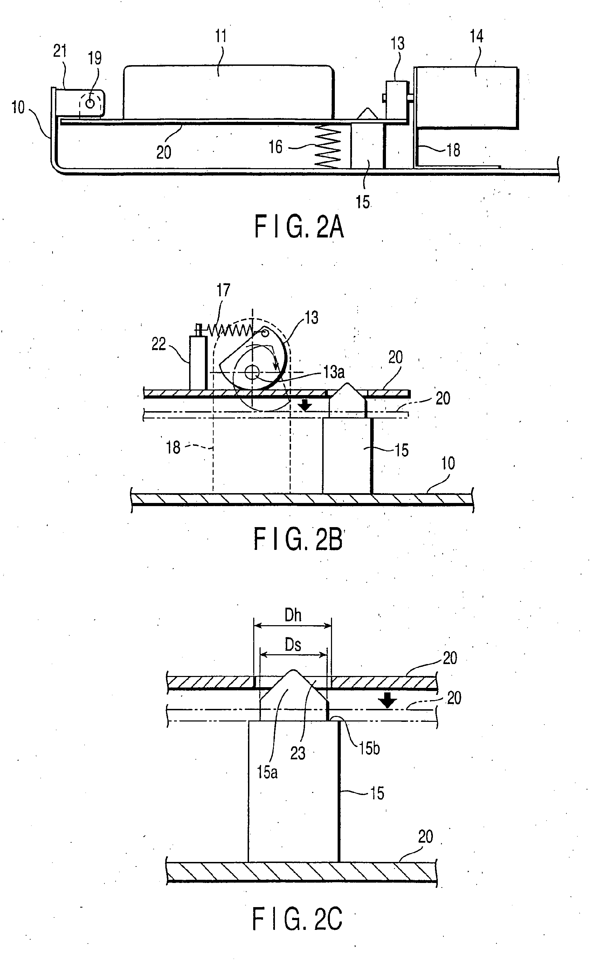

FIG. 2A is a view showing an outer peripheral portion side of the HDD 11 as viewed from an arrow A direction of FIG. 1. FIG. 2A shows the case where, with the apparatus on, the HDD 11 is fixed to the chassis 10 through stepped studs 15. FIG. 2B is a view showing a peripheral portion of the eccentric cam 13 as viewed from an arrow B direction of FIG. 1. FIG. 2B shows the case where, with the apparatus on, the HDD bracket 20 is pushed down by the rotation of the eccentric cam 13. FIG. 2C is an enlarged view at and near the stepped stud 15.

Below the semi-fixed side of the HDD bracket 20, the stepped stud 15 is fixed to the chassis 10. When the power source is turned on, the eccentric cam 13 is rotated to allow a hole 23 in the HDD bracket 20 on the semi-fixed side to be lowered past a conical upper section 15a of the stepped stud 15 to a flat-surface latching section 15b of the stepped stud 15 and to be fixed at a held-down state. The eccentric cam 13 and solenoid 14 serve as a displacing means for displacing the HDD bracket 20 and the stepped stud 15 acts as a displacement restricting means for restricting a displacement of the HDD bracket 20.

When the power source of the apparatus is turned OFF, the eccentric cam 13 is returned back to the rotation position of the eccentric cam as indicated by a solid line in FIG. 2B by a returning spring 17 attached to the forward end portion of a shaft 22. As shown in FIG. 2C, the difference between a diameter Dh of the hole 23 and the outer diameter Ds of the conical upper section 15a of the stepped stud 15 is very small. Since a clearance between the hole 23 and the conical upper section 15a is so defined as to be set to be very small with the HDD bracket 20 latched to the latching section 15b, it is possible to effectively prevent resonance of the HDD 11. If, without providing the flat latching section 15b, the upper section of the stud 15 is formed simply to a conical configuration and the hole 23 is fitted over the conical configuration of the stud without any substantial clearance, it is possible to prevent any resonance of the HDD 11.

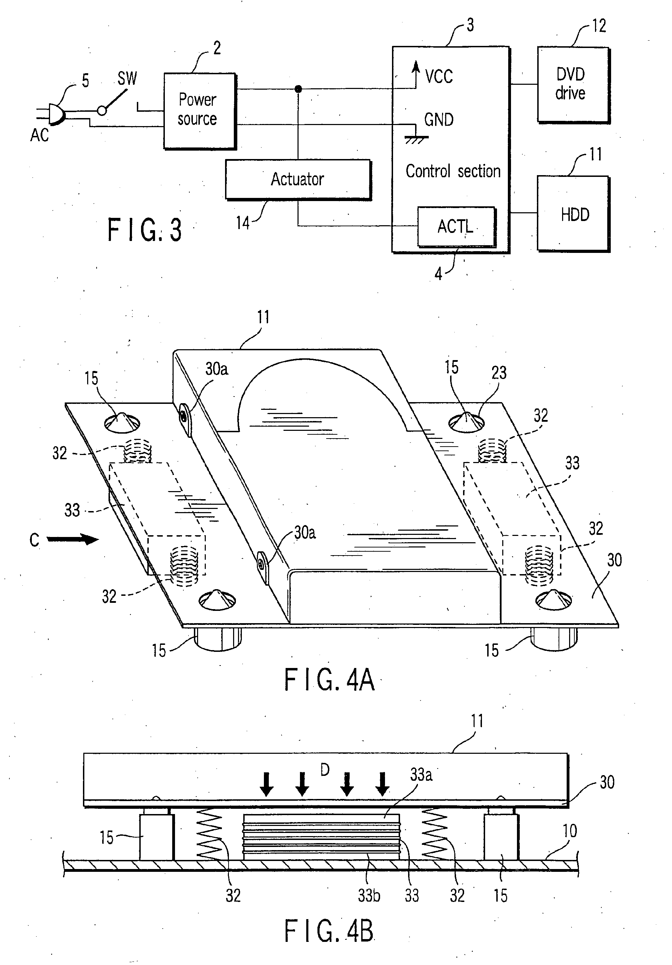

FIG. 3 is a block diagram showing a practical example of an electrical arrangement of the present apparatus. A power source 2 converts, for example, AC 100V to a DC voltage Vcc. A control section 3 controls a recording/reproducing operation of the HDD 11 and DVD drive 12. The actuator controller 4 controls a current for driving the actuator (solenoid) 14. Although the actuator 14 may be connected simply between Vcc and GND, its current level is controlled by the actuator controller (ACTL) 4 in the present embodiment.

When AC 100V is supplied through an AC plug 5 and a power source switch SW is turned on, the power source 2 supplies the DC voltage Vcc to the control section 3. The actuator controller 4 controls the current through the actuator 14 such that the HDD 11 is fixed to the stepped stud without involving any impact.

FIG. 4A is a perspective view showing an HDD retaining structure of an HDD-incorporated DVD recorder according to a second embodiment of the present invention. The DVD recorder and chassis are the same as those in the first embodiment and these are omitted for the sake of brevity. FIG. 4B is a view showing a unit of FIG. 4A as seen from an arrow C direction.

An HDD 11 is fixed by screws to an HDD bracket 30 at a plurality of fixing sections including fixing sections 30a. A through hole 23 is provided at each of four corners of the HDD bracket 30 and a corresponding stepped stud 15 is fixed to the chassis at a position below the hole 23. A relation between the hole 23 and the stepped stud 15 is the same as set out in connection with the first embodiment of the present invention. At each of the four corners of the HDD bracket 30 in a position below the HDD bracket and in a position different from that of the stepped stud 15, a damping member 32 such as coil spring is provided. The HDD bracket 30 is mounted through the damping member 32 to the chassis 10 in a semi-fixed state. An electromagnet 33 is provided below the opposite ends of the HDD bracket 30. The electromagnet 33 comprises a core 33a and coil 33b and is fixed to the chassis 10. Here, a proper number of electromagnets can be used. The electrical circuit arrangement of this embodiment is the some as that shown in FIG. 3 and the electromagnet 33 corresponds to the actuator 14.

When the apparatus is turned on, electric current flows through the coil 33b and an attraction force is generated in an arrow D direction in the HDD bracket 30 toward the electromagnet 33 to cause the HDD bracket 30 to be pushed down. As a result, the HDD bracket 30 is fixed to the stepped stud 15. When the HDD bracket 30 is fixed, the electric current through the coil 33b is decreased by an actuator controller 4 and power saving driving is done.

In this embodiment, when no electric power is supplied to the power source, the HDD bracket is supported only by the damping member 32 and it is, therefore, possible to secure a high impact-resistant characteristic with which an impact is absorbed in all directions in comparison with the first embodiment. Even in this case, as the impact material/member 32, use can be made not only of the coil spring but also an impact absorbing material such as rubber, urethane, air spring, and so on.

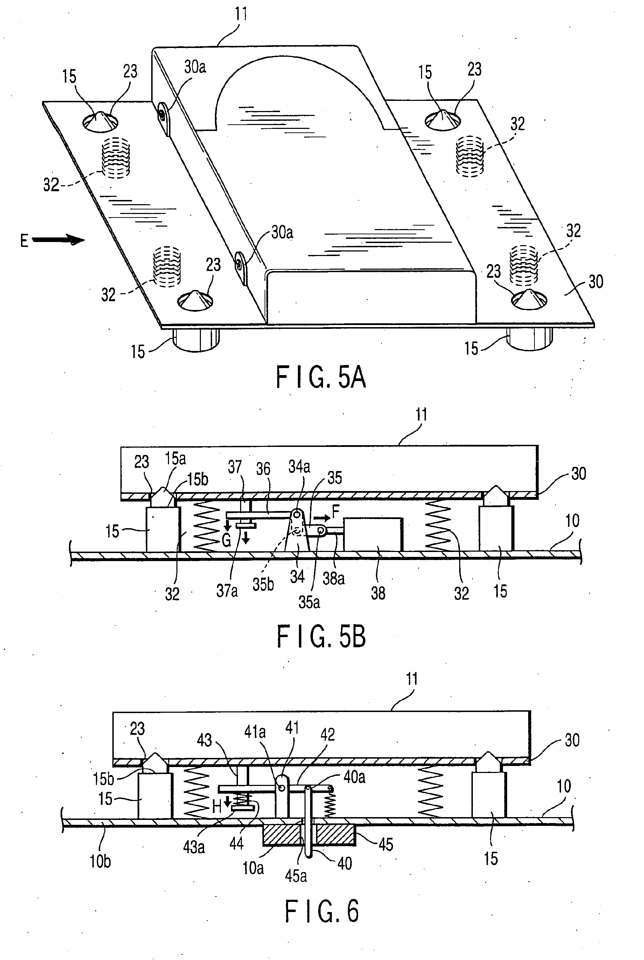

FIG. 5A is a perspective view showing an HDD retaining structure of an HDD-incorporated DVD recorder according to a third embodiment of the present invention. The DVD recorder and chassis are the same as those of the first embodiment and these are omitted for brevity sake. FIG. 5B is a view showing the apparatus of FIG. 5A as seen from an arrow E direction.

As seen from FIG. 5A, the structure of an HDD bracket 30, hole 23, stepped stud 15 and damper member 32 in this embodiment is the same as in the second embodiment. In this embodiment, as shown in FIG. 5B, a solenoid 38 is used, as the actuator, in place of the electromagnet 33 of the second embodiment. The electrical circuit arrangement of this embodiment is the same as that in FIG. 3 and the solenoid 38 corresponds to the actuator 14.

The solenoid 38 is fixed to a chassis 10 through a bracket, not shown. A shaft 38a of the solenoid 38 is so connected to an I-shaped link 35 as to be rotatable about a rotation shaft 35a. The I-shaped link 35 is so connected to an L-shaped link 36 as to be rotatable about a rotation shaft 35b. The L-shaped link 36 is so connected to a support member 34 as to be rotatable about a rotation shaft 34a. The support member 34 is fixed to the chassis 10. A through hole (not shown) is provided in an arrow G direction in/near the forward end portion of the L-shaped link. A pressing-down shaft 37 extends through the through hole with some clearance provided therebetween. The pressing-down shaft 37 has a latching section 37a whose diameter is larger than that of the through hole. The latching section 37a is provided on the forward end of a shaft 37 as viewed in a G-direction so as to prevent the L-shaped link 36 from downwardly slipping out of the through hole. The shaft 37 is fixed to the HDD bracket 30.

When the apparatus is turned on, electric current flows through the solenoid 38 and the solenoid shaft 38a is moved in an arrow F direction and the I-shaped link 35 is moved in the same direction. With the movement of the I-shaped link 35 in the F direction, the L-shaped link 36 is rotated about the rotation shaft 34a to allow the pressing-down shaft 37 to be pressed down in the G direction. At this time, the bottommost surface of the HDD bracket 30, while allowing their through holes 23 to be guided along the conical upper sections 15a of the stepped studs 15, is moved down to the position of ring-shaped flat surfaces 15b and finally fixed to the stepped studs 15. In this embodiment, a pressing-down mechanism comprises the solenoid 38 and link mechanism (34 to 37) which are provided below the HDD bracket 30. The number and arrangement of these can be properly selected.

In this embodiment, when the power source is turned off, the HDD bracket is supported by the damping member 32 only and it is possible to obtain a high impact-resistant characteristic with which an impact can be absorbed in all directions as in the same way as set out in connection with the second embodiment. Even in this case, as a damping member 32 use can be made of not only the coil spring but also an impact absorbing material such as rubber, urethane, air spring, etc.

FIG. 6 shows an HDD protection structure of an HDD-incorporated DVD recorder according to a fourth embodiment of the present invention. Even in this embodiment, the structure of an HDD bracket 30, through holes 23, stepped studs 15 and damping member 32 is the same as in the second embodiment. In this embodiment, an HDD support mechanism as shown in FIG. 6 is provided on one or more of, generally, four rubber foot members which are provided on the undersurface of the chassis 10.

Through holes 45a and 10a are formed in the rubber foot member 45 and chassis 10 and a shaft 40 extends through these through holes 45a and 10a with some clearance created therebetween. The shaft 40 is so connected to an I-shaped link 42 as to be rotatable about a rotation shaft 40a. The I-shaped link 42 is so connected to a support member 41 as to be rotatable about a rotation shaft 41a. The support member 41 is fixed to the chassis. A through hole (not shown) is provided, in an arrowH direction, in/near the forward end portion of the I-shaped link. A pressing-down shaft 43 extends out of the through hole with some clearance therebetween. A latch section 43a is provided on the forward end of the pressing-down shaft 43 as seen in the H direction and has an outer diameter greater than the diameter of the through hole to prevent the I-shaped link 42 from outwardly slipping out of the through hole. The pressing-down shaft 43 is fixed to the HDD bracket 30. Between the'latching section 43a and the I-shaped link 42, a compression coil spring 44 is wrapped around the pressing-down shaft 43.

When the apparatus is placed on a disk, etc., the shaft extending out of the rubber foot member is moved upwardly under the weight of the apparatus. At this time, the shaft 40 serves as a detection member for detecting that the housing 10 is placed with its bottom surface 10b down. With the upward movement of the shaft 40, the I-shaped link 42 is rotated about the rotation shaft 41a to allow its one end which is situated on the pressing-down shaft 43 side to be moved downward. Thus, the latching section 43a of the pressing-down shaft 43 is pressed down by the I-shaped link 42 through the spring 44. At this time, the HDD bracket 30, while allowing its'through holes 23 to be guided along the conical upper sections of corresponding stepped studs 15, is pushed down to ring-shaped flat surfaces 15b of the stepped studs 15 and finally fixed to the stepped studs 15.

In this embodiment, since no electric power is dissipated in the case where the HDD 11 is fixed to the chassis through the studs 15, it is possible to achieve electric power saving.

## Claims

1. An electronic apparatus **characterized by** comprising:
a housing (10);
an electronic unit (11) incorporated in the housing; and
a retaining mechanism (13 to 18) configured to retain the electronic unit (11) in one of a floating state and a fixed state, the retaining mechanism (13 to 18) retains the electronic unit (11) in a fixed state in accordance with start of electrical power supply to the electronic unit (11).

2. An electronic apparatus according to claim 1, **characterized in that** the retaining mechanism (13 to 18) retains the electronic unit (11) in the fixed state from the fixed state in accordance with end of electrical power supply to the electronic unit (11).

3. An electronic apparatus according to claim 1, **characterized in that** the retaining mechanism (13 to 18) comprises
a damping section (16) configured to retain the electronic unit (11) in the floating state;
a displacement restricting section (15) configured to restrict displacement of the electronic unit (11); and
a displacing section (13, 14) configured to displace the electronic unit (11) in a direction toward the displacement restricting section (15b) in accordance with start of electrical power supply to the electronic unit (11) and maintain the electronic unit (11) in a position fitted over the displacement restricting section (15b).

4. An electronic apparatus according to claim 3, **characterized in that** the retaining mechanism (13 to 18) includes a bracket (20) with the electronic unit mounted thereon and the displacing section (13, 14) includes a motor (14) driven in accordance with start of electrical power supply to the electronic unit (11) and a cam (13) configured to displace the bracket (20) in a direction toward the displacement restricting section by driving of the motor.

5. An electronic apparatus according to claim 4, **characterized in that** the bracket (20) is configured to have one end rotatably supported on the housing (10) and the other end displaced by the cam (13) in a direction toward the displacement restricting section (15b).

6. An electronic apparatus according to claim 3, **characterized in that** the retaining mechanism (13 to 18) includes a bracket (20) with the electronic unit (11) mounted thereon and the displacing section (13, 14) includes a solenoid (14) configured to displace the bracket in a direction toward the displacement restricting section (15b) in accordance with start of electrical power supply to the electronic unit (11).

7. An electronic apparatus according to claim 6, **characterized in that** the damping section (16) is provided at each end of the bracket (20) and the solenoid (14) is provided between both ends of the damping section (16).

8. An electronic apparatus comprises:
a housing (10);
an electronic unit (11) incorporated in the housing (10); and
a retaining mechanism (15, 32) configured to retain the electronic unit (11) in one of a floating state and a fixed state and configured to have a detecting section (40 to 44) detecting that the housing has been put in place.

9. An electronic apparatus according to claim 8, **characterized in that** the housing (10) has a bottom surface (10b) and the detecting section (40 to 44) includes a shaft urged in a direction projecting out of the bottom surface of the housing and, when the housing is put in place, pushed in a direction toward the housing.

10. An electronic apparatus according to claim 9, **characterized in that** a foot section (45) is provided on the bottom surface of the housing and the shaft (40) is projected out of the foot section.

11. An electronic apparatus according to claim 9, **characterized in that** the retaining mechanism (15, 32) includes a link mechanism (41 to 44) configured to, when the shaft (40) is inwardly pushed in a direction toward the housing from the outwardly projecting state, retain the electronic (11) unit in the fixed state from the floating state, keeping pace with the displacement of the shaft.
